# EUROPÄISCHE PATENTSCHRIFT

(11) **EP 3 124 840 B1**
(45) Veröffentlichungstag und Bekanntmachung des Hinweises auf die Patenterteilung: **08.05.2019**
(21) Anmeldenummer: 16175891.7
(22) Anmeldetag: 23.06.2016
(51) Int. Cl.: F16K 39/02, F16K 31/06

(54) **ELEKTRISCH BETÄTIGTES VENTIL**
ELECTRICALLY ACTUATED VALVE
SOUPAPE ELECTRIQUE

(30) Priorität: 28.07.2015 DE 102015112328
(43) Veröffentlichungstag der Anmeldung: 01.02.2017
(73) Patentinhaber: Rausch & Pausch GmbH, 95100 Selb (DE)
(72) Erfinder: GREINER, Herwig, 95339 Neuenmarkt (DE); SCHIEWECK, Werner, 95199 Thierstein (DE)
(74) Vertreter: Klunker IP Patentanwälte PartG mbB

(56) Entgegenhaltungen:
- WO-A1-2007/088043
- DE-A1-102011 078 102
- DE-B3-102011 082 007
- DE-C1- 4 401 215

## Beschreibung

Die vorliegende Erfindung betrifft ein Luftfedersystem für ein Kraftfahrzeug mit einem oder mehreren elektrisch oder elektromagnetisch betätigten Ventilen nach dem Oberbegriff des Anspruchs 1.

Ventile der vorgenannten Art kommen in Luftfedersystemen von Kraftfahrzeugen in verschiedener Weise und für verschiedene Funktionen zum Einsatz. Es existieren beispielsweise Ventile zum Befüllen und Entleeren der Luftfederbälge, Ventile zum Zuschalten oder Sperren von Speichern im System, sowie Ventile, über welche die Balgvolumen mit Zusatzvolumen bei Bedarf verbunden werden können. Bevorzugt werden solche Ventile elektromagnetisch betätigt, so auch das im Patent DE 10 2011 078 102 A1 beschriebene Sitzventil.

Derartige Ventile umfassen unter anderem die im weiteren Verlauf genauer beschriebenen drei Bauelemente. Ein erstes Bauelement, das als Verschlusselement fungiert, kann entlang einer Achse zwei Positionen einnehmen, wobei in der ersten Position mindestens ein Durchfluss freigegeben wird, der in der zweiten Position gesperrt ist. Ein zweites Bauelement umgibt das erste, wobei zwischen beiden Bauelementen ein Dichtspalt besteht. Das dritte Bauelement ist eine dynamische Dichtung, die im Dichtspalt angeordnet ist. Sie sorgt für eine gegenseitige radiale Abdichtung des ersten gegenüber dem zweiten Bauelement.

Die Patentschrift DE 44 01 215 C1 offenbart ein Eckventil, insbesondere für Vakuumanlagen, dass die genannten Bauelemente umfasst und darüber hinaus die beschriebene Funktionsweise aufweist. An einem ersten Bauelement, welches entlang einer Achse verschiebbar ist, ist eine Dichtung fixiert. Ein zweites Bauelement weist eine Innenwand mit einem kegelartig verlaufenden Abschnitt auf und umgibt das erste Bauelement. Befindet sich das Eckventil im geöffneten Zustand, so ist die sich im Dichtspalt befindliche Dichtung vom kegelartigen Teil der Innenwand des zweiten Bauelements distanziert. Im geschlossenen Zustand des Ventils liegt die Dichtung an der Innenwand des zweiten Bauelements an und dichtet das erste und das zweite Bauelement radial gegeneinander ab.

Meist sind solche Ventile als druckausgeglichene Ventile konstruiert. Das bedeutet, dass der axial auf einer Vorderseite des Verschlusselements anliegende Druck auf die axial gegenüberliegende Rückseite des Verschlusselements geleitet wird. Der dadurch entstehende Druckausgleich zwischen beiden Seiten des Verschlusselements erleichtert einerseits die axiale Verschiebung des Verschlusselements, und andererseits verhindert er die unkontrollierte Verschiebung des ersten Elements, also des Verschlusselements, aufgrund unterschiedlicher, an den gegenüberliegenden Seiten anliegenden Drücken.

Die dynamische Dichtung trennt im gesperrten Zustand des Ventils den an der Vorderseite und - wegen des Druckausgleichs - insbesondere auch an der Rückseite des Verschlusselements anliegenden Druck von dem Druck desjenigen angrenzenden Volumens, zu dem das Ventil den Durchfluss sperrt.

Es kommen dabei unterschiedliche dynamische Dichtungen zum Einsatz. Typische Vertreter dieser Dichtungsart sind Tandemdichtungen, Quadringe oder einfache O-Ringe. Ein Quad-Ring hat anders als ein O-Ring einen in etwa quadratischen oder X-förmigen Querschnitt mit zwei radial außen liegenden und zwei radial innen liegenden, axial zueinander beabstandeten Dichtlippen. Eine Tandemdichtung umfasst dagegen einen Stützkörper für einen radial innen liegenden O-Ring zur Abdichtung nach innen und einen radial außen liegenden O-Ring zur Abdichtung nach außen und kann mit einem Gleitring zum Beispiel aus PTFE kombiniert sein, der zwischen einem O-Ring und dem beweglichen Bauteil liegt. Der Gleitring übernimmt dabei eine Führungsfunktion für das bewegliche Bauteil. Zur Verbesserung der Führungsfunktion kann ein zusätzlicher Führungsring axial benachbart zum Gleitring Anwendung finden. Das Patent DE 10 2011 082 007 B3 offenbart eine spezielle Tandemdichtung, die einen Dichtkörper mit zwei axial beabstandeten, radial außen liegenden Dichtlippen und zwei axial beabstandeten, radial innen liegenden Dichtlippen, sowie einen den Dichtkörper tragenden Stützkörper umfasst.

Für die dynamische Dichtung in solchen Ventilen ergeben sich verschiedene Anforderungen. Aufgrund der hohen und schwankenden Drücke im Luftfedersystem sind große Anpresskräfte der Dichtung an die sie umgebenden Bauteile erforderlich, um eine ausreichende Dichtigkeit zu gewährleisten. Das führt dazu, dass für die Betätigung der Ventile große Stellkräfte benötigt werden. Der Antrieb eines solchen Ventils muss daher entsprechend viel Energie bereitstellen können, was wiederum zu großen Abmessungen und einem hohen elektrischen Energiebedarf führt. Auch die Montage der Ventile gestaltet sich schwierig, da eine große Kraft bei der Vorspannung der Dichtung erforderlich ist.

Aufgabe der vorliegenden Erfindung ist es, ein Luftfedersystem für ein Kraftfahrzeugvorzuschlagen, dessen elektrisch oder elektromagnetisch betätigten Ventile geringe Stellkräfte erfordern.

Diese Aufgabe wird erfindungsgemäß durch ein Luftfedersystem für ein Kraftfahrzeug mit elektrisch oder elektromagnetisch betätigten Ventilen mit den Merkmalen des unabhängigen Anspruchs 1 gelöst. In davon abhängigen Ansprüchen sind vorteilhafte Ausgestaltungen und Weiterbildungen der Erfindung angegeben.

Erfindungsgemäß besitzt ein solches Ventil einen in Abhängigkeit zur axialen Lage des Verschlusselements in der Weite variierenden Dichtspalt. Darum weist eines der beiden Bauelemente, an dem die Dichtung nicht fixiert ist, mindestens eine Freidrehung mit dementsprechend verringertem bzw. vergrößertem Durchmesser auf, wobei die Dichtung in einer ersten axialen Position des Verschlusselements mit einer Dichtlippe in der Freidrehung anliegt. Damit hängt die Reibung der dynamischen Dichtung mit den sie umgebenden Bauelementen von der axialen Lage des verschiebbaren ersten Bauelements ab. Das hat zur Folge, dass sich auch die benötigten Stellkräfte proportional zur Reibung ändern.

In der zweiten Position, also im gesperrten Zustand des Ventils, befindet sich die Dichtlippe der dynamischen Dichtung außerhalb der Freidrehung. Damit ist eine Abdichtung garantiert. In der ersten Position, in der das Ventil geöffnet ist, wird hingegen die Dichtwirkung der dynamischen Dichtung nicht benötigt; die Dichtung kann somit lockerer und damit
reibungsreduziert im Dichtspalt sitzen. Gegebenenfalls ist in der ersten Position keine Dichtwirkung vorhanden.

Die Überwindung der Haftreibung aus einer Ruhelage heraus ist mit erhöhtem Stellenergieaufwand verbunden. In der ersten Position wird diese durch den Sitz der Dichtlippen der dynamischen Dichtung in den entsprechenden Freidrehungen minimiert. Das wiederum hat verschiedene Vorteile. So können die Abmessungen und die Leistung der Antriebseinheit verringert werden, bei zugleich schnellerer Ventilschaltzeit. Der elektrische Energiebedarf wird gesenkt. Auch die Montage des Ventils wird vereinfacht, da die Vorspannkräfte der Dichtung in bestimmten Bereichen des Ventils verringert sind.

Vorzugsweise weist der Dichtspalt in Abhängigkeit zur axialen Lage des Verschlusselements genau zwei unterschiedliche Weiten auf, eine für jede der beiden Positionen.

Der Durchfluss durch das Ventil kann an einem Ende mindestens eine axiale Durchflussöffnung und an einem anderen Ende zum Beispiel mindestens eine radiale Durchflussöffnung aufweisen, wobei das Verschlusselement in der zweiten Position eine Abdichtung der mindestens einen axialen Durchflussöffnung bewirkt. Vorzugsweise handelt es sich bei dem Ventil um ein Sitzventil, aber die Erfindung lässt sich vorteilhaft auch auf andersartige Ventile anwenden, zum Beispiel Schieberventile.

Üblicherweise ist die dynamische Dichtung ortsfest in dem Ventil fixiert. Dementsprechend weist das dem die Dichtung fixierenden Bauelement gegenüberliegende Bauelement mindestens eine, vorzugsweise zwei, Freidrehungen mit verringertem bzw. vergrößertem Durchmesser auf. Durch die axiale Fixierung der Dichtung an einem Bauelement kann die Dichtspaltweite in Abhängigkeit zur axialen Lage des anderen Bauelements reproduzierbar festgelegt werden.

Vorzugsweise verfügt die dynamische Dichtung über zwei Dichtlippen, die in der ersten Position in den zwei Freidrehungen und in der zweiten Position außerhalb der beiden Freidrehungen sitzen. Damit ist eine maximale Flächenpressung und somit Dichtheit in der zweiten Position garantiert, während in der ersten Position die geringste Flächenpressung und damit auch die geringste Haftreibung vorliegt, die (abgesehen von der Rückstellfederkraft) zur Betätigung des Ventils nur noch zu überwinden ist.

Vorzugsweise handelt es sich bei dem Ventil um ein elektromagnetisch betätigtes Ventil, dessen beweglicher Anker entweder das erste verschiebbare Bauelement bildet oder mit diesem verbunden ist.

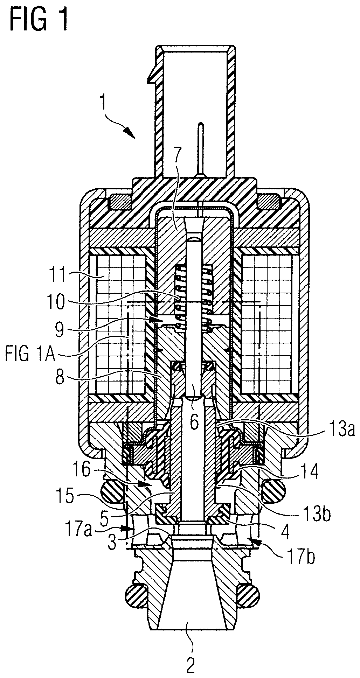

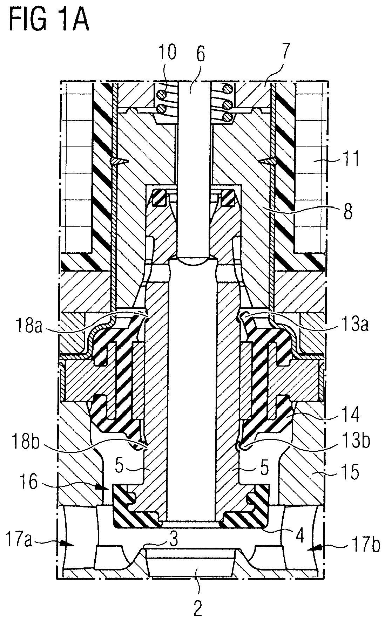

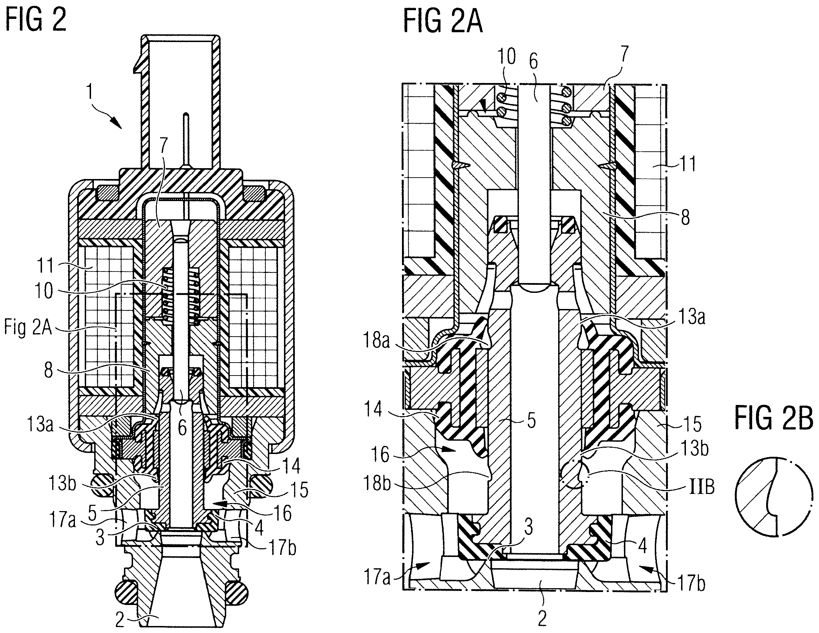

Nachfolgend wird die Erfindung beispielhaft anhand der anhängenden Figuren dargestellt. Darin zeigen:
Fig. 1 ein elektromagnetisches Sitzventil für ein Luftfedersystem eines Kraftfahrzeugs gemäß einem bevorzugten Ausführungsbeispiel im geöffneten Zustand,
Fig. 1A einen vergrößerten Ausschnitt des Ventils aus Fig. 1,
Fig. 2 das Ventil aus Fig. 1 im gesperrten Zustand,
Fig. 2A wiederum einen vergrößerten Ausschnitt des Ventils aus Fig. 2, und
Fig. 2B eine vergrößerte Darstellung einer Freidrehung am Stößel.
Das in Fig. 1 im geöffneten Zustand und in Fig. 2 im gesperrten Zustand dargestellte Sitzventil 1 besitzt eine Ventilöffnung 2 mit einem Dichtsitz 3, welches durch ein Dichtelement 4 verschließbar ist. Die Dichtfläche des Dichtelements 4 ist elastisch verformbar, um eine zuverlässige Abdichtung der axialen Durchflussöffnung 2 zu gewährleisten. Das Dichtelement 4 sitzt am vorderen axialen Ende eines Stößels 5, der über eine Verbindungsstange 6 mit einem beweglichen Magnetanker 7 gekoppelt ist. Es ist prinzipiell denkbar, das Dichtelement 4 unmittelbar am Magnetanker 7 zu befestigen. Im dargestellten Ausführungsbeispiel sitzt der Stößel 5 jedoch fest auf der Verbindungsstange 6, welche wiederum fest im Magnetanker 7 sitzt. Dadurch ergibt sich eine bewegliche Baugruppe bestehend aus Dichtelement 4, Stößel 5, Verbindungsstange 6 und Magnetanker 7. Der Stößel 5 selbst ist hohl. Durch ihn wird der an der Vorderseite des Dichtelements 4 anliegende Druck auf die Rückseite des Stößels 5 geleitet, sodass oberhalb einer dynamischen Dichtung 14 und unterhalb des Dichtelements 4 derselbe Druck anliegt. Der Stößel 5 ist von einem zweiten Bauelement 15 umgeben. Zusammen spannen sie einen Umfangsdichtspalt 16 auf, in dem die dynamische Dichtung 14 sitzt und in radiale Richtung abdichtet.

Der bewegliche Magnetanker 7 ist Teil eines Eisenkreises, dem auch ein ortsfestes Polteil 8 zugehört. Zwischen dem Magnetanker 7 und dem Polteil 8 liegt ein Arbeitsluftspalt 9, der es dem Magnetanker 7 ermöglicht, sich axial in Richtung auf das Polteil 8 zuzubewegen, wenn das Dichtelement 4 in seine in Fig. 2 dargestellte Schließposition gebracht wird. Im gesperrten Zustand wird der Durchfluss zwischen den radialen Durchflussöffnungen 17a, 17b und der axialen Durchflussöffnung 2 unterbunden, indem das Dichtelement 4 den Dichtsitz 3 und die dynamische Dichtung 14 den Durchfluss durch den Stößel 5 selbst verschließt.

In der in Fig. 1 dargestellten geöffneten Schaltstellung des Ventils wird der Magnetanker 7 durch mechanische Belastung mittels eines Federelements 10 beabstandet zum Polteil 8 gehalten. Wie die vergrößerte Darstellung gemäß Figur 1A zeigt, liegen dabei die beiden Dichtlippen 13a, 13b der dynamischen Dichtung 14 an Freidrehungen 18a, 18b des Stößels 5 an. Das hat zur Folge, dass sowohl die Dichtwirkung als auch die Reibung gering sind.

Durch elektrische Bestromung einer den Magnetanker 7 und das Polteil 8 umgebenden Spule 11 wird ein den Magnetanker 7 und das Polteil 8 durchsetzender Magnetkreis in der Weise erzeugt, dass zwischen dem Polteil 8 und dem Magnetanker 7 eine magnetische Anziehungskraft wirkt, die der mechanischen Belastung des Federelements 10 entgegenwirkt und diese überwindet. Der Magnetanker 7 bewegt sich dann über den Arbeitsluftspalt 9 auf das Polteil 8 zu, so dass der Stößel axial verschoben wird und das Dichtelement 4 den Dichtsitz 3 verschließt. Dabei reduziert der lockere Sitz der dynamischen Dichtung 14 die zu überwindende Haftreibung erheblich. Zur axialen Verschiebung des Stößels 5 aus seiner Ruhelage heraus wird somit vergleichsweise wenig elektrische Energie benötigt. Während des Schließvorgangs werden die Dichtlippen 13a, 13b der dynamischen Dichtung 14 aus den Freidrehungen 18a, 18b des Stößels 5 auf einen größeren Durchmesser geschoben, sodass die Dichtwirkung der dynamischen Dichtung 14 zunimmt.

Im geschlossenen Zustand des Ventils 1 sitzen beide Dichtlippen 13a, 13b vollständig außerhalb der Freidrehungen 18a, 18b, wie in Figur 2A in größerem Detail gezeigt. Die dynamische Dichtung 14 garantiert so eine hohe Dichtwirkung, die benötigt wird, um auch den Durchfluss durch den druckausgeglichenen hohlen Stößel 5 zu sperren. Aufgrund der nun erhöhten Flächenpressung der Dichtlippen 13a, 13b an der Oberfläche des Stößels 5, erhöht sich die Reibung, insbesondere die Haftreibung. Jedoch wird zur erneuten Öffnung des Ventils 1 keine elektrische Energie benötigt, da insoweit die axiale Bewegung des Stößels 5 alleine durch das vorgespannte Federelement 10 gewährleistet werden kann.

## Patentansprüche

1. Luftfedersystem für ein Kraftfahrzeug, umfassend mindestens ein elektrisch oder elektromagnetisch betätigtes Ventil (1), welches aufweist:
- ein erstes Bauelement (5), welches durch Verschiebung entlang einer Achse zwei Positionen einnehmen kann, wobei in der ersten Position mindestens ein Durchfluss freigegeben wird, der in der zweiten Position gesperrt ist,
- ein das erste Bauelement (5) umgebendes zweites Bauelement (15), wobei zwischen beiden Bauelementen (5, 15) ein Umfangsdichtspalt (16) besteht,
- eine dynamische Dichtung (14), umfassend eine Dichtlippe (13), wobei die dynamische Dichtung (14) im Umfangsdichtspalt (16) angeordnet und an einem der beiden Bauelemente (5, 15) axial fixiert ist, in zumindest einer axialen Lage des ersten Bauelements (5) die beiden Bauelemente (5, 15) radial gegeneinander abdichtet und bei der axialen Verschiebung des ersten Bauelements (5) über eine Oberfläche eines der beiden Bauelemente (5, 15) gleitet,
**dadurch gekennzeichnet, dass** dasjenige der beiden Bauelemente (5, 15), an dem die dynamische Dichtung (14) nicht fixiert ist, über mindestens eine Freidrehung (18) mit dementsprechend verringertem bzw. vergrößertem Durchmesser verfügt, in der sich die Dichtlippe (13) der dynamischen Dichtung (14) in der ersten Position des ersten Bauelements (5) befindet, wobei sich die Dichtlippe (13) in der zweiten Position des ersten Bauelements (5) außerhalb dieser mindestens einen Freidrehung (18) befindet und die beiden Bauelemente (5, 15) radial gegeneinander abdichtet.

2. Luftfedersystem nach Anspruch 1, **dadurch gekennzeichnet, dass** es sich bei dem Ventil (1) um ein druckausgeglichenes Ventil (1) handelt, bei dem ein axial auf einer Vorderseite des ersten Bauelements (5) anliegender Druck auf die axial gegenüberliegende Rückseite des ersten Bauelements (5) geleitet wird, sodass es zu einem Druckausgleich zwischen der Vorder- und Rückseite des ersten Bauelements (5) kommt.

3. Luftfedersystem nach Anspruch 1 oder 2, **dadurch gekennzeichnet, dass** der Dichtspalt (16) genau zwei unterschiedliche Weiten aufweist.

4. Luftfedersystem nach einem der Ansprüche 1 bis 3, **dadurch gekennzeichnet, dass** der mindestens eine Durchfluss an einem Ende mindestens eine axiale Durchflussöffnung (2) umfasst und dass das erste Bauelement (5) in der zweiten Position eine Abdichtung der mindestens einen axialen Durchflussöffnung (2) bewirkt.

5. Luftfedersystem nach Anspruch 4, **dadurch gekennzeichnet, dass** es sich bei dem Ventil (1) um ein Sitzventil handelt.

6. Luftfedersystem nach einem der Ansprüche 1 bis 5, **dadurch gekennzeichnet, dass** dasjenige der beiden Bauelemente (5, 15), an dem die dynamische Dichtung (14) nicht fixiert ist, zwei Freidrehungen (18a, 18b) mit dementsprechend verringertem bzw. vergrößertem Durchmesser aufweist.

7. Luftfedersystem nach einem der Ansprüche 1 bis 6, **dadurch gekennzeichnet, dass** die dynamische Dichtung (14) über zwei Dichtlippen (13a, 13b) verfügt.

8. Luftfedersystem nach einem der Ansprüche 1 bis 6, **dadurch gekennzeichnet, dass** es sich bei dem Ventil (1) um ein elektromagnetisch betätigtes Ventil (1) handelt, dessen beweglicher Anker (7) entweder das erste Bauelement (5) bildet oder mit dem ersten Bauelement (5) verbunden ist.

## Claims

1. An air damping system for a motor vehicle, comprising at least one electrically or electromagnetically actuated valve (1), having:
- a first structural element (5) which can assume two positions by displacement along an axis, wherein in the first position at least one flow is released, which is blocked in the second position,
- a second structural element (15) surrounding the first structural element (5), wherein a circumferential sealing gap (16) exists between the two structural elements (5, 15),
- a dynamic seal (14), comprising a sealing lip (13), wherein the dynamic seal (14) is arranged in the circumferential sealing gap (16) and axially fixed on one of the two structural elements (5, 15), in at least one axial position of the first structural element (5) mutually seals the two structural elements (5, 15) radially, and slides over a surface of one of the two structural elements (5, 15) upon the axial displacement of the first structural element (5),
**characterized in that** that one of the two structural elements (5, 15) to which the dynamic seal (14) is not fixed has at least one recess (18) with correspondingly reduced or increased diameter, in which the sealing lip (13) of the dynamic seal (14) is disposed in the first position of the first structural element (5), wherein the sealing lip (13) in the second position of the first structural element (5) is disposed outside said at least one recess (18) and mutually seals the two structural elements (5, 15) radially.

2. The air damping system according to claim 1, **characterized in that** the valve (1) is a pressure-compensated valve (1), wherein a pressure present axially on a front side of the first structural element (5) is passed to the axially opposing back side of the first structural element (5), so that a pressure compensation occurs between the front and back sides of the first structural element (5).

3. The air damping system according claim 1 or 2, **characterized in that** the sealing gap (16) has exactly two different widths.

4. The air damping system according to any of claims 1 to 3, **characterized in that** the at least one flow comprises at one end at least one axial flow opening (2), and that the first structural element (5) effectuates a sealing of the at least one axial flow opening (2) in the second position.

5. The air damping system according to claim 4, **characterized in that** the valve (1) is a seat valve.

6. The air damping system according to any of claims 1 to 5, **characterized in that** that one of the two structural elements (5, 15) on which the dynamic seal (14) is not fixed has two recesses (18a, 18b) with correspondingly reduced or increased diameter.

7. The air damping system according to any of claims 1 to 6, **characterized in that** the dynamic seal (14) has two sealing lips (13a, 13b).

8. The air damping system according to any of claims 1 to 6, **characterized in that** the valve (1) is an electromagnetically actuated valve (1) whose movable armature (7) either forms the first structural element (5) or is connected to the first structural element (5).

## Revendications

1. Système à ressort pneumatique pour un véhicule automobile, comprenant au moins une vanne (1) actionnée électriquement ou électromagnétiquement, lequel comporte :
- un premier composant (5) qui, par déplacement le long d'un axe, peut adopter deux positions, cependant que, dans la première position, au moins un écoulement est libéré, lequel est fermé dans la deuxième position,
- un deuxième composant (15) entourant le premier composant (5), cependant que, entre les deux composants (5,15), il y a une fente périphérique d'étanchéité (16),
- un joint dynamique d'étanchéité (14) comprenant une lèvre d'étanchéité (13), cependant que le joint dynamique d'étanchéité (14) est agencé dans la fente périphérique d'étanchéité (16) et fixé axialement à un des deux composants (5,15), que, dans au moins une disposition axiale du premier composant (5), il étanchéifie les deux composants (5,15) radialement l'un contre l'autre, et que, lors du déplacement axial du premier composant (5), il glisse par-dessus une surface d'un des deux composants (5,15),
**caractérisé en ce que** celui des deux composants (5,15) auquel le joint dynamique d'étanchéité (14) n'est pas fixé dispose d'au moins un dégagement (18) dont le diamètre est réduit ou augmenté en conséquence et dans lequel la lèvre d'étanchéité (13) du joint dynamique d'étanchéité (14) se trouve dans la première position du premier composant (5), cependant que la lèvre d'étanchéité (13) se trouve, dans la deuxième position du premier composant (5), à l'extérieur de ce au moins un dégagement (18) et étanchéifie les deux composants (5,15) radialement l'un contre l'autre.

2. Système à ressort pneumatique selon la revendication 1, **caractérisé en ce que** la vanne (1) consiste en une vanne compensée en pression (1) dans laquelle une pression appliquée axialement à une face antérieure du premier composant (5) est dirigée vers la face arrière du premier composant (5) axialement opposée, de telle sorte qu'une compensation de pression entre la face antérieure et la face arrière du premier composant (5) est engendrée.

3. Système à ressort pneumatique selon la revendication 1 ou 2, **caractérisé en ce que** la fente d'étanchéité (16) présente exactement deux largeurs différentes.

4. Système à ressort pneumatique selon une des revendications de 1 à 3, **caractérisé en ce que** le au moins un écoulement comprend à une extrémité au moins une ouverture axiale d'écoulement (2), et que le premier composant (5) entraîne, dans la deuxième position, une étanchéification de la au moins une ouverture axiale d'écoulement (2).

5. Système à ressort pneumatique selon la revendication 4, **caractérisé en ce que** la vanne (1) consiste en une vanne à siège.

6. Système à ressort pneumatique selon une des revendications de 1 à 5, **caractérisé en ce que** celui des deux composants (5,15) auquel le joint dynamique d'étanchéité (14) n'est pas fixé comporte deux dégagements (18a, 18b) dont le diamètre est réduit ou augmenté en conséquence.

7. Système à ressort pneumatique selon une des revendications de 1 à 6, **caractérisé en ce que** le joint dynamique d'étanchéité (14) dispose de deux lèvres d'étanchéité (13a, 13b).

8. Système à ressort pneumatique selon une des revendications de 1 à 6, **caractérisé en ce que** la vanne (1) consiste en une vanne actionnée électromagnétiquement, dont l'armature (7) mobile soit constitue le premier composant (5), soit est reliée au premier composant (5).
